# EUROPEAN PATENT SPECIFICATION

(11) **EP 0 801 972 B1**
(45) Date of publication and mention of the grant of the patent: **26.11.2003**
(21) Application number: 97302700.6
(22) Date of filing: 21.04.1997
(51) Int. Cl.: B01D 53/94, B01J 29/06, B01J 23/10, B01J 23/63

(54) **Exhaust emission control catalyst**
Katalysator zur Regelung der Abgasemission
Catalyseur d'émission de gaz d'échappement

(30) Priority: 19.04.1996 JP 9828896
(43) Date of publication of application: 22.10.1997
(60) Divisional application: 02009354.8
(73) Proprietor: HONDA GIKEN KOGYO KABUSHIKI KAISHA, Minato-ku, Tokyo (JP)
(72) Inventor: Terada, Kazuhide, K. K. Honda Gijutsu Kenkyusho, Saitama (JP); Narishige, Takeshi, K. K. Honda Gijutsu Kenkyusho, Saitama (JP); Nakanishi, Yoshiyuki, K.K. Honda Gijutsu Kenkyusho, Saitama (JP); Fukuda, Kaoru, K. K. Honda Gijutsu Kenkyusho, Saitama (JP)
(74) Representative: Calamita, Roberto

(56) References cited:
- EP-A- 0 462 598
- EP-A- 0 485 180
- EP-A- 0 489 433
- EP-A- 0 513 469
- EP-A- 0 613 714
- EP-A- 0 645 185
- EP-A- 0 671 208
- US-A- 4 849 398
- US-A- 5 480 622

## Description

The present invention relates to an exhaust emission control catalyst.

Japanese Patent Application Laid-open No.8-131838 discloses an exhaust emission control catalyst that includes a crystalline aluminosilicate with a catalytic metal carried thereon, namely, a zeolite with Pt carried thereon, and CeO₂. The present inventors have made various examinations of that catalyst and, as a result, found that if that catalyst is exposed to a high-temperature environment including oxygen and water vapor, namely, a hydrothermal environment, there is a tendency for it to deteriorate, resulting in a reduced NOₓ (nitrogen oxides) converting ability in an excessive-oxygen atmosphere.

It is an object of the present invention to provide an exhaust emission control catalyst of the above-described type, wherein the catalyst is further developed and even after it is exposed to a hydrothermal environment as described above, the NOₓ converting ability can be maintained at a high level.

To achieve the above object, according to the present invention, there is provided an exhaust emission control catalyst comprising, as basic components, a crystalline aluminosilicate with platinum carried thereon, and CeO₂, wherein at least one of La and Ba is included in said CeO₂.

With the above feature, the platinum is a catalytic metal which exhibits an oxidizing ability and a reducing ability to an exhaust gas. The oxidizing ability of the platinum contributes to an oxidizing reaction represented by HC (hydrocarbon) + O₂ → H₂O + O₂ and CO + O₂ → CO₂. The reducing ability of the platinum contributes to a reducing reaction represented by NOₓ + CO → N₂ + CO₂ and NOₓ + HC → N₂ + CO₂ + H₂O by adsorbing NOₓ at a theoretically ideal air-fuel ratio (stoichiometric). On the other hand, the reducing ability of the platinum contributes to an oxidizing reaction represented by NOₓ + O₂ → NO₂ and a reducing reaction represented by NO₂ + HC + O₂ → H₂O in the excessive-oxygen atmosphere.

The crystalline aluminosilicate has a function to adsorb HC in an exhaust gas to concentrate it and to supply such HC to the platinum. Thus, it is possible to enhance the NOₓ conversion rate in the excessive-oxygen atmosphere.

The CeO₂ exhibits an NOₓ adsorbing ability in the excessive-oxygen atmosphere and hence, the concentration of NOₓ in the vicinity of the catalytic metal is increased. This also makes it possible to enhance the NOₓ conversion rate in the excessive-oxygen atmosphere.

According to the present invention, there is provided an exhaust emission control catalyst consisting of a crystalline aluminosilicate with a platinum carried thereon, and CeO₂, wherein at least one of La and Ba is included in said CeO₂. The CeO₂ including La and/or Ba has a high NOₓ adsorbing ability in an excessive-oxygen atmosphere compared with the CeO₂ not including La or the like and hence, it is possible to further enhance the NOₓ converting ability in such atmosphere. The same is true even after exposure of the catalyst to the hydrothermal environment.

### BRIEF DESCRIPTION OF THE DRAWINGS:

Fig. 1 is an illustration for explaining CeO₂.
Fig. 2. is a graph illustrating an example of the relationship between the catalysts as examples of this invention and comparative examples, and the maximum NO conversion rate.

The exhaust emission control catalyst of this invention includes a crystalline aluminosilicate having platinum carried thereon and CeO₂ as basic components.

A zeolite such as a modified ZSM-5 zeolite is used as the crystalline aluminosilicate. At least one of La and Ba is contained in the CeO₂ in this embodiment.

The CeO₂ including La and/or Ba as described above has a high NO adsorbing ability in an excessive-oxygen atmosphere, as compared with CeO₂ including no La or Ba and hence, the No conversion rate in such atmosphere can be further enhanced. This is also true even after exposure to the hydrothermal environment.

The production of the Pt-carried modified ZSM-5 zeolite and CeO₂ is carried out in the following manner.

The zeolite may be an MFI-type zeolite having a relatively good heat-resistance, e.g., a ZSM-5 zeolite. This ZSM-5 zeolite may be an unmodified one, but if heat resistance to a high-temperature exhaust gas during operation of an engine is considered, it is desirable to use a modified ZSM-5 zeolite produced by subjecting the unmodified zeolite to a de-aluminization.

The de-aluminization of the unmodified ZSM-5 zeolite which may be utilized is at least one of an acid treatment, a steaming treatment, and a boiled-water treatment.

The acid treatment may be a process which involves heating an HCl solution of 0.5 to 5 N to a temperature in a range of 70 to 90°C, placing the unmodified ZSM-5 zeolite in such HCl solution and agitating the solution containing the unmodified ZSM-5 zeolite for 1 to 20 hours.

The boiled-water treatment may be a process which involves subjecting the unmodified ZSM-5 zeolite to a hydrating treatment, rising the atmospheric temperature around the hydrated unmodified ZSM-5 zeolite to 550 to 600°C, and maintaining the unmodified ZSM-5 zeolite under such high-temperature atmosphere for 4 hours.

The steaming treatment may be a process which involves maintaining the unmodified ZSM-5 zeolite in an atmosphere including water of about 10 % and having a temperature in a range of 750 to 900°C for 10 to 20 hours.

The acid treatment, the boiled-water treatment and the steaming treatment may be utilized alone or in combination of two or more of them, and may be repeated, if required. In this manner, a modified ZSM-5 zeolite is produced and has a SiO₂/Al₂O₃ molar ratio in a range of 25 to 800.

In such a modified ZSM-5 zeolite, the crystallizability is enhanced by the de-aluminizing treatment, and the generation of the nucleus of a pyrolysis product is inhibited. Therefore, the heat-resistant temperature of the modified ASM-5 zeolite is increased to about 100°C.

A ZSM-5 zeolite having Pt carried thereon is produced by allowing platinum (Pt) to be carried on a modified ZSM-5 zeolite by an ion exchanging process, an impregnating process or the like.

Platinum (Pt) which is a catalytic metal exhibits an oxidizing ability and a reducing ability to an exhaust gas.

The oxidizing ability of platinum contributes to an oxidizing reaction represented by HC (hydrocarbon) + O₂ → H₂O + O₂ and CO + O₂ → CO₂.

The reducing ability of platinum contributes to a reducing reaction represented by NO + CO → N₂ + CO₂ and NO + HC → N₂ + H₂O + CO₂ which is caused by adsorption of NOₓ, e.g., NO in this embodiment at a theoretical air-fuel ratio, on the one hand, and contributes to an oxidizing reaction represented by NO + O₂ → NO₂ and a reducing reaction represented by NO₂ + HC + O₂ → N₂ + CO₂ + H₂O at an excessive-oxygen atmosphere, on the other hand.

The modified ZSM-5 zeolite has a hydrophobic nature enhanced by the de-aluminizing treatment and a basic skeleton structure possessed by the unmodified ZSM-5 zeolite, and moreover, has a specific surface area enlarged by the removal of aluminum. Therefore, the adsorbing ability which is a characteristic of the modified ZSM-5 zeolite is promoted. Such modified ZSM-5 zeolite exhibits a good adsorbing ability to HC in an exhaust gas even in the presence of water to concentrate HC and also exhibits a function to supply the HC to platinum. Thus, it is possible to enhance the rate of purification of NO in the excessive-oxygen atmosphere.

CeO₂ exhibits an NO adsorbing ability in the excessive-oxygen atmosphere and hence, the concentration of NO in the vicinity of platinum (Pt). This also makes it possible to enhance the rate of purification of NO in the excessive-oxygen atmosphere.

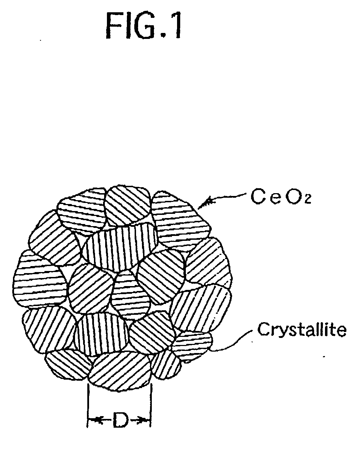

CeO₂ is formed of polycrystalline grains each of which is comprised of a plurality of crystallites congregated, as shown in Fig.1. To cause the CeO₂ to exhibit the above-described function, the average diameter D of the crystallites is set in a range of D < 500Å, preferably, in a range of D ≤ 320Å.

In producing CeO₂, any of various Ce salts such as Ce carbonate, Ce oxalate, Ce nitrate and the like is heated in the presence of oxygen. when pure CeO₂ free from any rare earth element is produced, CeO₂ produced after heating is washed with nitric acid.

The control of the average diameter D of the crystallites is performed by regulating the heating temperature in the producing course. For example, for CeO₂ having an average diameter D of crystallites equal to 78Å, Ce nitrate is heated at about 250°C for 5 hours. The average diameter D of the crystallites can be also controlled by subjecting the produced CeO₂ to a thermal treatment. For example, if the CeO₂ having the average diameter of 78Å is subjected to the thermal treatment at 700°C for 30 hours, CeO₂ having an average diameter D of 205Å is produced.

To calculate a diameter D₍ₕₖₗ₎ of crystallites, the Schuler equation, i.e., D₍ₕₖₗ₎ = 0.9λ/(β_{1/2} • cosθ) was used, wherein hkl is Miller index; λ is a wavelength (Å) of characteristic X-rays; β_{1/2} is a half-value width (radian) of a (hkl) face; and θ is an X-ray reflection angle. Therefore, in the CeO₂, a diameter D₍₁₁₁₎ of each of the crystallites was calculated by measuring the half-value width β_{1/2} of a (111) face from an X-ray diffraction pattern, and an average diameter D of the crystallites was determined from the diameters D₍₁₁₁₎ of the crystallites.

In producing the CeO₂ including La and/or Ba, namely, La-including CeO₂, Ba-including CeO₂ and La-Ba-including CeO₂, lanthanum nitrate is used as La, and barium nitrate is used as Ba. The steps of suspending CeO₂ into a solution of each of the lanthanum nitrate and the barium nitrate, agitating, drying and calcining the suspension are conducted in sequence.

If the weight of Pt-carried modified ZSM-5 zeolite incorporated in the catalyst is represented by E, and the weight of La-including CeO₂, Ba-including CeO₂ or La-Ba-including CeO₂ incorporated in the catalyst is represented by F, the proportion E₁ [= {E/(E + F)} x 100] of the Pt-carried modified ZSM-5 zeolite is set in a range of 19 % by weight < E₁ < 100 % by weight. If the weight of Pt-carried modified ZSM-5 zeolite incorporated is represented by a, and the weight of Pt incorporated is represented by b, the proportion b₁ {= (b/a) x 100} of Pt by weight is set in a range of 3.5 % by weight ≤ b₁ ≤ 11 % by weight. Further, if the weight of La-including CeO₂, Ba-including CeO₂ or La-Ba-including CeO₂ incorporated is represented by d, and the weight of La, Ba or La + Ba incorporated is represented by e, the proportion e₁ {= (e/d) x 100} of La, Ba or both by weight is set in a range of 5 % by weight ≤ e₁ ≤ 25 % by weight.

However, if the proportion E₁ of the Pt-carried modified ZSM-5 zeolite is equal to or smaller than 19 % by weight, the HC adsorbing ability of the Pt-carried modified ZSM-5 zeolite is reduced and for this reason, the NO conversion rate is decreased. On the other hand, if the proportion E₁ is equal to 100 %, the ability to adsorb NO by the La-including CeO₂ or the like is not obtained and hence, the NO conversion rate is decreased. If the proportion b₁ of Pt is smaller than 3.5 % by weight, the amount of Pt carried is smaller and hence, the NO conversion rate is decreased. On the other hand, if the proportion b₁ of Pt is set in a range of b₁ > 11 % by weight, the NO conversion rate is varied only a little. Further, if the proportion e₁ of La or the like is smaller than 5 % by weight, there is no effect created by the fact that some La or the like is contained. On the other hand, if e₁ is > 25 % by weight, the amount of La-including CeO₂ is decreased and hence, the NO conversion is decreased, and the contribution to the purification is decreased, as compared with the case where the CeO₂ is contained along in the catalyst.

Various examples of the invention and comparative examples, as well as the processes used in making and testing them will now be described. First, the production of the modified ZSM-5 zeolite used in all the examples will be described.

### Production of modified ZSM-5 zeolite:

1. An unmodified ZSM-5 zeolite having a SiO₂/Al₂O₃ molar ratio of 42 was placed in a 5N solution of HCl at 90°C, and the resulting solution was agitated for 20 hours to provide a slurry-like matter.
2. Solids were separated from the slurry-like matter by filtering and washed with pure water, until the pH of the washing water reached a value equal to or larger than 4.
3. The solids were subjected to a drying treatment under conditions of 130°C for 5 hours and then to a calcining treatment at 400°C for 12 hours in the atmosphere, thereby providing a massive modified ZSM-5 zeolite.
4. The massive modified ZSM-5 zeolite was subjected to a pulverizing treatment to provide a powdery modified ZSM-5 zeolite. The SiO₂/Al₂O₃ molar ratio of this powdery modified ZSM-5 zeolite was 54 and hence, it can be seen that the de-aluminization occurred. The heat-resistant temperature of the powdery modified ZSM-5 zeolite was 1,000°C.

### Reference Example

### Production of Pt-Mg carried modified ZSM-5 zeolite

1. 25 grams of platinum dinitrodiamine was dissolved in 1,000 ml of 25 % ammonia water by heating to provide a platinum solution (having a Pt concentration of 1.5 %).
2. 100 grams of the modified ZSM-5 zeolite was added to the platinum solution, and the resulting mixture was agitated at 90°C for 12 hours to cause Pt to be carried on the modified ZSM-5 zeolite by the ion exchange process.
3. After cooling, the Pt-carried modified ZSM-5 zeolite was separated by filtering and then washed with pure water.
4. The Pt-carried modified ZSM-5 zeolite was subjected to a drying treatment at 120°C for 3 hours in the atmosphere and then to a calcining treatment at 400°C for 12 hours in the atmosphere. The proportion b₁ of Pt in the Pt-carried modified ZSM-5 zeolite was equal to 7.6 % by weight.
5. Magnesium was carried on the Pt-carried modified ZSM-5 zeolite by an impregnating process which will be described below, thereby providing a Pt-Mg-carried ZSM-5 zeolite.
   (a) An aqueous solution of 6-hydrated magnesium nitrate [Mg(NO₃)₂•6H₂O] having a predetermined concentration was added in an amount of 400 ml to the Pt-carried modified ZSM-5 zeolite having a predetermined incorporation weight to provide a mixture.
   (b) An evaporator was used to remove water from the mixture.
   (c) The mixture was subjected to a drying treatment at 120°C for 3 hours in the atmosphere and then to a calcining treatment at 400°C for 12 hours in the atmosphere.

### Aging Treatment

The Pt-Mg carried modified ZSM-5 zeolite was subjected to an aging treatment.

### Production of catalyst

30 grams of the above-described Pt-Mg carried modified ZSM-5 zeolite resulting from the aging treatment, 60 grams of CeO₂ having an average diameter D of 76Å, 50 grams of 20 % silica sol, 180 grams of pure water and alumina balls were thrown into a pot, and they were subjected to a wet pulverization for 12 hours to prepare a slurry-like catalyst. In this case, the composition of the catalyst comprises 30 % by weight of the Pt-Mg carried modified ZSM-5 zeolite, 60 % by weight of CeO₂ and 10 % by weight, of SiO₂. Therefore, che proportion A₁ of the Pt-Mg carried modified ZSM-5 zeolite is nearly equal to 33 % by weight (A₂ ≈ 33 % by weight). On the other hand, the proportion B₁ [= {B/(A + B)} x 100] of the CeO₂ is nearly equal to 67 % by weight.

A 6 mil honeycomb support made of cordierite having a diameter of 25.5 mm, a length of 60 mm and 400 cells/in² was immersed into the slurry-like catalyst. Then, the honeycomb support was taken out from the slurry-like catalyst, and an excessive amount of the catalyst was removed by jetting of air. Thereafter, the honeycomb support was maintained under heating at 150°C for 1 hour to dry the slurry-like support and further it was subjected to a calcining treatment at 400°C for 12 hours in the atmosphere, thereby supporting the catalyst on the honeycomb support. In this case, the amount of catalyst retained on the honeycomb support was 150 g/liter.

A Pt-carried modified ZSM-5 zeolite resulting from an aging treatment similar to that described above in place of the Pt-Mg-carried modified ZSM-5 zeolite, was produced in the same manner as described above. The proportion of the Pt-carried modified ZSM-5 zeolite in this comparative example was about 33 % by weight, and the proportion of CeO₃ was about 67 % by weight.

### Test of purification of supposed exhaust gas

A test gas having a composition shown in Table 1 was prepared as a simulation gas in a case of an air-fuel ratio A/F = 24 that simulates the exahust gas during a low-load lean burn.

**Table 1**

| Component | Test gas A/F = 24 (% by volume) |
|---|---|
| CO₂ | 1.0 |
| H₂ | 0.03 |
| C3H₆ | 0.12 |
| NO | 0.02 |
| CO | 0.1 |
| O₂ | 10.0 |
| H₂O | 10.0 |
| N₂ | balance |

In the purifying test, the catalyst of the example 1 was first placed in a fixed-bed flow reaction device. Then, the test gas was allowed to flow through the device at a space velocity S. V. of 5 x 10⁴ h⁻¹, and at the same time, the temperature of the test gas was risen at a rising rate of 20°C/min to 500°C. The NO conversion rate by the catalyst during this time was measured.

### Example A:

In this Example A, a catalyst will be described which is comprised of a Pt-carried modified ZSM-5 zeolite and CeO₂ including La or Ba.
A. Production of CeO₂ including La or Ba
   1. La-including CeO₂
      (a) 31.2 grams of 6-hydrated lanthanum nitrate [La(NO₂)₃•6H₂O] was dissolved in 600 ml of pure water to prepare an aqueous solution.
      (b) 90.0 grams of CeO₂ (having an average diameter D of crystallites equal to 78Å) was suspended in the aqueous solution to provide a La-including CeO₂ mixture.
      (c) Using an evaporator, water was removed from the mixture.
      (d) The Ba-including CeO₂ mixture was subjected to a drying treatment at 120°C for 3 hours in the atmosphere and then to a calcining treatment at 600°C for 1 hour in the atmosphere. The proportion e₁ of La in the La-including CeO₂ was equal to 10 % by weight.
   2. Ba-including CeO₂
      (a) 19.0 gram of barium nitrate [Ba(NO₃)₂] was dissolved into 600 ml of pure water to prepare an aqueous solution.
      (b) 90.0 gram of CeO₂ (having an average diameter D of crystallites equal to 78) was suspended in the aqueous solution to provide a Ba-including CeO₂ mixture.
      (c) Using an evaporator, water was removed from the mixture.
      (d) The La-including CeO₂ mixture was subjected to a drying treatment at 120°C for 3 hours in the atmosphere and then to a calcining treatment at 600°C for 1 hours in the atmosphere. The proportion e₁ of Ba in the Ba-including CeO₂ was equal to 10 % by weight.
B. Using a Pt-carried modified ZSM-S zeolite (proportion b₁ of Pt = 7.6 % by weight) resulting from the aging treatment and a La-including CeO₂ or Ba-including CeO₂, examples 1 and 2 of catalysts were produced in a process similar to that described in the Production of Catalyst of the Reference Example.

In the examples 1 and 2, the proportion E₁ of the Pt-carried modified ZSM-5 zeolite was nearly equal to 33 % by weight, while the proportions F₁ [= {F/(E + F)} x 100] of the La-including CeO₂ and the Ba-including CeO₂ were nearly equal to 67 % by weight, respectively.

Then, a purifying test was carried out for the catalysts of the examples 1 and 2 in a method similar to that described in the Test of purification of supposed exhaust gas of the Reference Example.

Table 2 shows the type of CeO₂, the maximum NO conversion rate and the gas temperature at the time when such maximum NO conversion rate was obtained, for the catalysts as the examples 1 and 2 and the comparative example.

**Table 2**

| Catalyst | | Type of CeO₂ | Maximum NO conversion rate (%) | Gas temperature (°C) |
|---|---|---|---|---|
| Example | 1 | La-including CeO₂ | 43.7 | 260 |
| | 2 | Ba-including CeO₂ | 48.5 | 270 |
| Comparative Example | | CeO₂ | 41.3 | 240 |

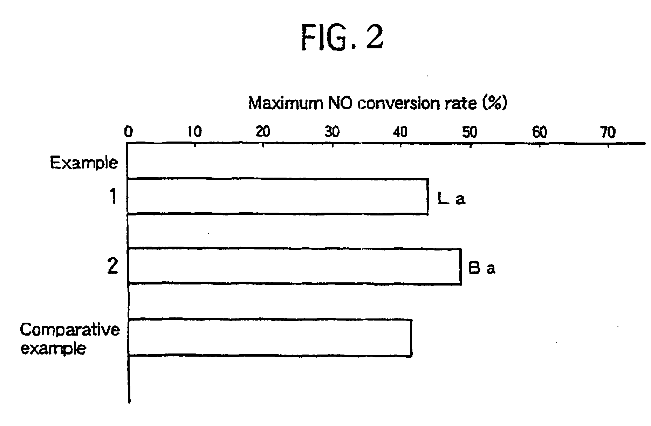

Fig. 2 is a graph produced from the relationship between catalysts as the examples 1 and 2 and the comparative example and the maximum NO conversion rate, based on Table 2.

As is apparent from Fig. 2,if La or Ba is carried on the CeO₂ as in the catalysts of the examples 1 and 2, the maximum NO conversion rate can be enhanced in the excessive-oxygen environment even after the aging treatment, more than that with the catalyst as the comparative example with no La or Ba carried thereon. This is attributable to an NO-adsorbing ability enhancing effect provided by the La-including or Ba-including CeO₂.

According to the present invention, it is possible to provide an exhaust emission control catalyst which is capable of exhibiting an excellent NOₓ converting ability in an excessive-oxygen atmosphere even after being exposed to a high-temperature environment including oxygen and water vapor by the above-described configuration of the catalyst.

## Claims

1. An exhaust emission control catalyst consisting of a crystalline aluminosilicate with platinum (Pt) carried thereon, and CeO₂, wherein at least one of La and Ba is included in said CeO₂.

2. An exhaust emission control catalyst as claimed in claim 1, wherein the proportion by weight of said crystalline aluminosilicate with platinum carried thereon and said CeO₂ containing at least one of La and Ba to the total weight of catalyst is in a range of 19% to 100%.

3. An exhaust emission control catalyst as claimed in claim 1 wherein the proportion by weight of at least one of said La and Ba to CeO₂ and at least one of said La and Ba is in the range 5% to 25%.

## Patentansprüche

1. Abgasemmisionskontrollkatalysator bestehend aus einem kristallinen Aluminiumsilikat mit darauf getragenem Platin (Pt), und aus CeO₂, worin mindestens eines von La und Ba in dem CeO₂ enthalten ist.

2. Abgasemmisionskontrollkatalysator nach Anspruch 1, worin der Gewichtsanteil des kristallinen Aluminiumsilikats mit darauf getragenem Platin, und des CeO₂, welches mindestens eines von La und Ba enthält, zum Gesamtgewicht des Katalysators im Bereich von 19% bis 100% liegt.

3. Abgasemmisionskontrollkatalysator nach Anspruch 1, worin der Gewichtsanteil von mindestens einem von La und Ba zu CeO₂ und mindestens einem von La und Ba im Bereich von 5% bis 25% liegt.

## Revendications

1. Catalyseur pour contrôler les émissions de gaz d'échappement constitué d'un aluminosilicate cristallin sur lequel est supporté du platine (Pt), et du CeO₂, dans lequel au moins un élément parmi La et Ba est inclus dans ledit CeO₂.

2. Catalyseur pour contrôler les émissions de gaz d'échappement selon la revendication 1, dans laquelle la proportion en poids dudit aluminosilicate cristallin sur lequel est supporté du platine et dudit CeO₂ contenant au moins un élément parmi La et Ba, par rapport au poids total de catalyseur est dans une gamme de 19 % à 100 %.

3. Catalyseur pour contrôler les émissions de gaz d'échappement selon la revendication 1 dans lequel la proportion en poids d'au moins un parmi lesdits La et Ba par rapport au CeO₂ est dans la gamme de 5 % à 25 %.
